# EUROPEAN PATENT APPLICATION

(11) **EP 0 894 534 A1**
(43) Date of publication of application: **03.02.1999**
(21) Application number: 98305194.7
(22) Date of filing: 30.06.1998
(51) Int. Cl.: B04B 1/20, F16D 7/08

(54) **Clutch enclosure for a decanting centrifugal separator**

(30) Priority: 30.06.1997 US 885119
(71) Applicant: Swaco, Oklahoma City, Oklahoma 73125-0246 (US)
(72) Inventor: Phillips, Victor, Luther, Oklahoma 73054 (US)
(74) Representative: Miller, James Lionel Woolverton

(57) **Abstract**

A coupling (38) is used with a centrifugal separator (10) and is enclosed in a sealed housing. The housing has first (158) and second (176) enclosure members. A relatively movable intermediate enclosure member (172) is mounted between the first and second members in sealed sliding engagement. The intermediate enclosure member is attached to a first trippable coupling member (146) which when tripped, is resiliently urged to move axially relative to a second trippable coupling member. This moves the intermediate enclosure member which is attached to the first coupling member. A flange (170) on the intermediate enclosure member, activates a limit switch (38a) to shut down the operation of the separator.

## Description

This invention relates generally to a decanting centrifuge and more particularly to a mechanical clutch protected from external contamination by a sealed enclosure operably attached to the power train of the centrifuge. The invention also relates to coupling enclosures and clutch enclosures.

Decanting centrifuges are well known in the art and are designed to process a mixture of two constituents, usually a liquid and a solid, separating one from the other. These types of centrifuges feature a rotating bowl and a spiral screw conveyer disposed inside the bowl which rotates in the same direction as the bowl and at a different speed. The mixture, which for the purpose of example, will be assumed to be a liquid having relative fine solid particles entrained therein, enters the bowl and the centrifugal forces direct and hold it against the inner wall of the bowl in a "pool" while the fluid is displaced to one end portion of the bowl for discharge. The solid particles settle against the wall and are transported, or displaced, by the screw conveyor to discharge ports extending through the opposite end portion of the bowl for discharge. Typical applications of this type of centrifuge is in pulp, paper, and waste water treatments and for the removal of dirt, sand, shale, abrasive cuttings, and/or silt particles (hereinafter referred to as "solid particles") from drilling fluid after the fluid has been circulated through a drilling bit to lift the cuttings to the surface in an oil field drilling operation.

A part of the power train which drives the rotational movement of the spiral screw includes a mechanical clutch coupling attached to a gearbox. The clutch is exposed to contamination due to dust, drilling mud, caustic chemicals and water. The contamination has an effect on the life, reliability and precise function of the clutch. The clutch limits the torque a related back drive electric motor can impose on the input shaft, or sun wheel shaft, of the gearbox. The gearbox establishes the differential speed of the screw conveyor with respect to the bowl.

It is imperative that this clutch, which limits the torque on the input of the gearbox from the back drive electric motor, releases at the same torque level each time. If the clutch releases too early, then it is impossible to completely load the conveyor, and the centrifuge cannot be utilized to its potential for solids removal. If release is prolonged, damage may result to the input section of the gearbox requiring costly repair and down time. When the coupling trips, sparks may be generated. This is undesirable due to the presence of gas and other hydrocarbons which percolate out of the drilling mud.

The clutch functions to protect the gearbox which is an expensive planetary gearbox and one of the most expensive components of the centrifuge. The clutch functions so that whenever the torque delivered to the clutch exceeds a preset limit, usually around 60 ft./lbs., the clutch will mechanically disengage the back drive motor from the input shaft to the gearbox which allows the conveyor to accelerate to the same rotational speed as the bowl.

It is object of the present invention to alleviate the concerns and problems of the prior art. What is needed, the present inventor notes, is a clutch which is encapsulated to shield the clutch elements from external contamination, reduces sparking, keeps the clutch elements lubricated and extends the life, reliability and precise function of the clutch so as to maintain proper operation of the centrifuge and protect the gearbox from damage.

Various aspects of the invention are set out in the independent claims. A number of preferred features are set out in the dependent claims. The invention also envisages and extends to any combination of any of the features of any of the aspects hereof and any preferred features which is not specifically recited herein.

Another aspect of the invention provides a coupling for use with a centrifugal separator which is enclosed in a sealed housing, the housing having first and second enclosure members, a relatively moveable intermediate enclosure member being mounted between the first and second members in sealed sliding engagement, the intermediate enclosure member being attached to a first trippable coupling member which, when tripped, is resiliently urged to move axially relative to a second trippable coupling member, this preferably moving the intermediate enclosure member which is attached to the first coupling member, a flange preferably being provided on the intermediate enclosure member, preferably for activating a limit switch to shut down the operation of the separator.

Another aspect of the invention provides an apparatus for encapsulating clutch elements in a sealed environment so that the clutch elements may function normally while being protected from contamination by sealed, relatively movable enclosure members. To this end, a coupling enclosure includes first and second enclosure members having an intermediate enclosure member therebetween. The intermediate enclosure member is preferably movable relative to the first and second enclosure members and is sealingly and slidably engaged with the first and second enclosure members. The intermediate member preferably has a first trippable coupling member attached thereto. One of the first and second enclosure members preferably has a second trippable coupling member attached thereto. In this manner, when the coupling members are tripped, the intermediate enclosure member is preferably axially displaced relative to the first and second enclosure members.

A principal advantage of this invention is that the coupling may be protected from external contamination, the coupling elements may be kept lubricated, the chance of sparking may be reduced, and wear of interactive surfaces may be reduced thus adding to the life, the reliability and enhancing the precise functioning of the coupling to maintain proper operation of the associated centrifuge.

The present invention may be carried out in various ways and a preferred embodiment of an enclosure for a decanting centrifugal separator in accordance with the invention will now be described by way of example with reference to the accompanying drawings, in which:

Fig. 1 is a sectional view illustrating an embodiment of a decanting centrifugal separator.

Fig. 2 is a schematic view illustrating an embodiment of the separator of Fig. 1 along with associated components of the separator system.

Fig. 3 is a cross-sectional side view partially illustrating a prior art G/S coupling and associated gear box.

Fig. 4 is a cross-sectional side view illustrating a preferred embodiment of the clutch enclosure of the present invention along with a G/S coupling in a running mode.

Fig. 5 is a cross-sectional side view illustrating the clutch enclosure and associated G/S coupling of Fig. 4 in a tripped mode.

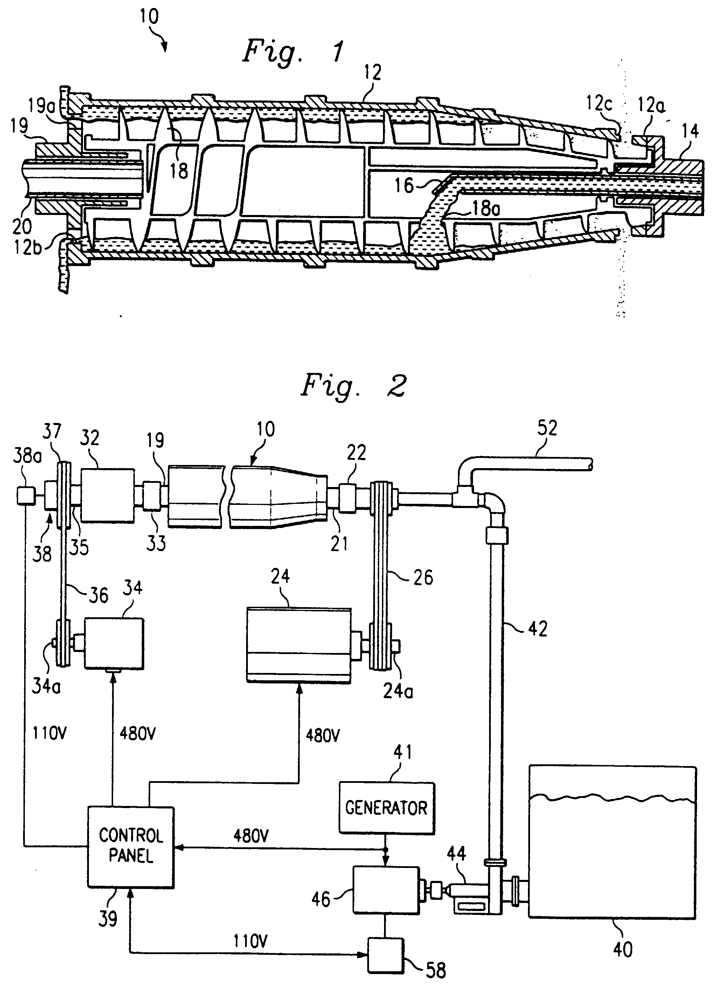

Referring to Fig. 1 of the drawings, the reference numeral 10 refers in general, to a centrifuge which may be used in accordance with preferred embodiments of the present invention. The centrifuge 10 includes an elongated bowl 12 supported for rotation about is longitudinal axis. The bowl 12 has two open ends 12a and 12b, with the open end 12a receiving a drive flange 14 which is connected to a drive shaft (not shown in Fig. 1) for rotating the bowl. A longitudinal passage extends through the drive flange 14 for receiving a feed tube 16 for introducing a feed slurry which, for the purposes of example, is a mixture of fluid and disbursed solid particles, into the interior of the bowl 12.

A screw conveyor 18 extends within the bowl 12 in a coaxial relationship thereto and is supported for rotation within the bowl in a manner to be described. To this end, a hollow flanged shaft 19 is disposed in the end 12b of the bowl and receives a drive shaft 20 of an external planetary gear box (not shown in Fig. 1) for rotating the screw conveyor 18 in the same direction as the bowl but at a different speed. One or more openings 18a extend through the wall of the conveyor 18 near the outlet end of the tube 16 so that the centrifugal forces generated by the rotating bowl 12 causes the slurry to gravitate radially outwardly and pass through the openings 18a and into the annular space between the conveyor and the bowl 12.The liquid portion of the slurry is displaced to the end 12b of the bowl 12 while the entrained solid particles in the slurry settle towards the inner surface of the bowl due to the G forces generated, and are scraped and displaced by the screw conveyor 18 back towards the end 12a of the bowl for discharge through a plurality of discharge ports 12c formed through the wall of the bowl 12 near its end 12a. A plurality of weirs 19a (two of which are shown) are provided through the flanged portion of the shaft 19 for discharging the separated liquid. This type of centrifuge is known in the art and, although not shown in the drawings, it is understood that the centrifuge 10 would be enclosed in a housing or casing, also in a conventional manner.

Referring to Fig. 2, a drive shaft 21 forms an extension of, or is connected to, the drive flange 14 (Fig. 1) and is supported by a bearing 22. A main drive motor 24 has an output shaft 24a which is connected to the drive shaft 21 by a drive belt 26 and therefore rotates the bowl 12 (Fig. 1) of the centrifuge 10 at a predetermined operation speed.

The flanged shaft 19 extends from the interior of the conveyor 18 to a planetary gear box 32 and is supported by a bearing 33. A back drive motor 34 has an output shaft 34a which is connected to a sun wheel 35 by a drive belt 36 and a sheave 37, the sun wheel 35 being connected to the input of the gear box 32.Therefore, the motor 34 rotates the screw conveyor 18 (Fig.1) of the centrifuge 10 through the planetary gear box 32 which functions to establish a differential speed of the conveyor 18 with respect to the bowl 12. A coupling 38 is provided on a shaft (discussed later) of the sun wheel 35, and a limit switch 38a is connected to the coupling 38 which functions in a conventional manner to shut off the centrifuge when excessive torque is applied to the gearbox 32.

A tank 40 is provided for receiving and containing the feed slurry being processed, and a conduit 42 connects an outlet opening formed in the lower portion of the tank to the feed tube 16.Although not shown in detail in the drawings, it is understood that an internal passage is formed through the shaft 21 which receives the conduit 42 and enables the feed slurry to pass through the conduit and the feed tube 16 and into the conveyor 18.A pump 44 is connected to the conduit 42 and is driven by a drive unit 46, preferably in the form of an electric motor, for pumping the slurry from the tank 40, through the conduit 42 and the feed tube 16, and into the centrifuge 10.

A conduit 52 registers with the conduit 42 for introducing a dilution agent, such as water or diesel, into the conduit 42.As a result, the viscosity of the slurry can be reduced so that sedimentation will occur more quickly and the centrifuge 10 can be flushed out when needed. A generator 41 sources 480V power to a control panel 39, back drive motor 34, main drive motor 24 and drive unit 46, operably connected to a magnetic starter 58.A 110V line interconnects control panel 39 with limit switch 38a and also with magnetic starter 58.

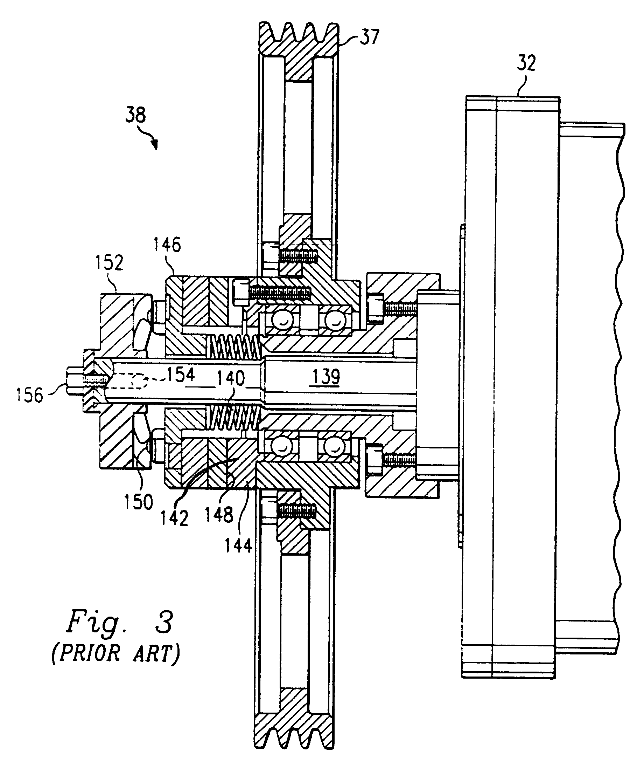

Coupling 38 is a well known G/S coupling, Fig. 3, which is a relatively sophisticated mechanical device using benvielle spring washers 140. Sheave 37 transmits torque through a brass clamping ring 142 including protruding dogs 144 which transmits the torque into a first coupling member 146. First coupling member 146 has slots 148 on one side to correspondingly receive dogs 144 and has a plurality of steel balls 150 on an opposite side which are mounted therein. Steel balls 150 transmit torque to a trippable second coupling member 152 which is oriented via a dowel pin 154 and attached via a bolt 156 to a sun wheel shaft 139 of sun wheel 35, Fig. 2, as previously mentioned. Washers 140 are compressed to urge first coupling member 146 against second coupling member 152.

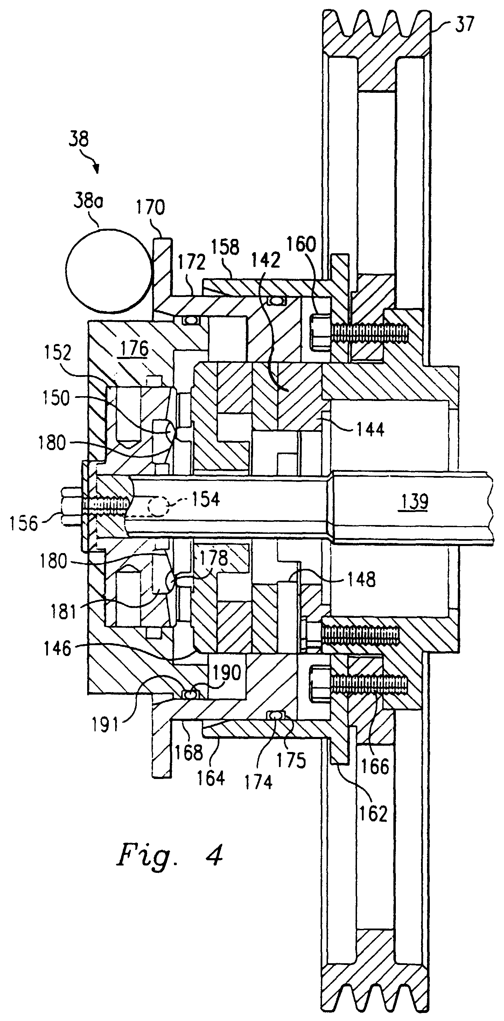

In the embodiment of Fig. 4, similar parts are given similar reference numerals to those described above in relation to Fig. 3.

A first protective housing portion 158, Fig. 4, is concentrically mounted about ring 142 and is rigidly attached to sheave 37 by a plurality of bolts 160. Housing portion 158, is annular and has a flange 162, an annular sleeve 164 and a plurality of bolt holes 166 provided for the above-mentioned attachment to sheave 37.The function of first protective housing portion 158 is to provide a sealed receiving surface for an intermediate protective housing portion 168 which also includes a flange 170 and an annular sleeve 172 provided to seat within sleeve 164 and to carry a sealing "O" ring 174 in a groove 175 for slidingly and sealingly engaging intermediate housing portion 168 within first housing portion 158.First coupling member 146 is press-fit concentrically within intermediate second housing portion 168 for movement therewith in an axial direction relative to shaft 139 when coupling 38 trips as will be discussed later. As viewed in Fig. 4, coupling 38 is in a running mode having dogs 144 engaged in slots 148.

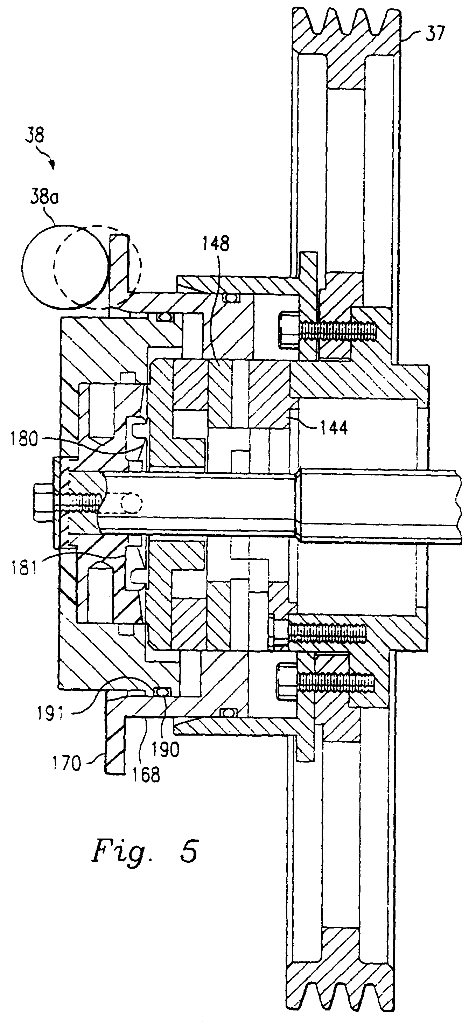

An end cap 176 is provided as a second protective housing portion for attachment with the second coupling member 152 by a plurality of bolts, not shown. Also, end cap 176 and attached coupling member 152 are attached to shaft 139 by bolt 156 and oriented therewith by dowel pin 154 as mentioned above. Second coupling member 152 includes a plurality of detents 178 configured to receive and seat steel balls 150 therein. A recess 181 between a plurality of ramps 180, adjacent detents 178, permits the above-mentioned axial movement of first coupling member 146 and second housing portion 168 a sufficient distance urged by washers to a tripped mode, Fig. 5, to unseat dogs 144 from slots 148 and trip the coupling 38 for the disengagement of power transmission from sheave 37 to shaft 139, shown in Fig. 5. These washers are located and operate in a similar manner to the washers 140 of Fig. 3 once the coupling of Fig. 4 is connected to the gearbox as shown in Fig. 3. Also, when coupling 38 trips, flange 170 of intermediate housing portion 168 contacts limit switch 38a,and moves a switch contact arm a sufficient distance to send an electrical signal to an associated control console to shut down the centrifuge 10. A sealing "O" ring 190 is provided in a groove 191 in end cap 176 for sealingly and slidably engaging the axially movable second housing portion 168, as described above.

In operation, and with reference to Figs. 1 and 2, the storage tank 40 receives the slurry, which for the purpose of example, will be assumed to be a mixture of fluid and entrained solid particles. The slurry is thus pumped through the conduit 42 and into the interior of the bowl 12 in the manner described above.

The motor 24 is activated to rotate the drive shaft 21, and therefore the bowl 12, at a predetermined speed. The motor 34 is also activated to rotate the sun wheel 35, and therefore the screw conveyor 18, through the planetary gear box 32, in the same direction as the bowl 12 and at a different speed. As a result of the rotation of the bowl 12, the centrifugal force thus produced forces the slurry radially outwardly so that it passes through the openings 18a in the conveyor and into the annular space between the conveyor and the bowl 12. The fluid portion of the slurry is displaced to the end 12b of the bowl 12 for discharge from the weirs 19a in the flanged shaft 19, while the entrained solid particles in the slurry settle towards the inner surface of the bowl due to the G forces generated, and are scraped and displaced by the screw conveyor 18 back towards the end 12a of the bowl for discharge through the discharge ports 12c.

When sufficient torque is transmitted to coupling 38, steel balls 150 will climb out of detents 178 and settle between ramps 180.This permits first coupling member 146 to move axially toward second coupling member 152 due to energy stored in the washers similar to those 140 of Fig. 3. Also, since first coupling member 146 is press fit into second protective housing portion 168, flange 170 is moved sufficiently to trip limit switch 38a so as to shut down centrifuge 10. The coupling 38 may be reset by restraining sheave 37 from rotation while relatively rotating the coupling members 146, 152 to set steel balls 150 back in detents 178.This can be accomplished by providing radially directed openings (not shown) in end cap 176.A screw driver or other suitable tool may be inserted into such openings while sheave 37 is held stationary, so that the coupling members 146, 152 can be reset and dogs 144 re-inserted into slots 148.

As it can be seen, the enclosure will seal the clutch coupling assembly in a grease bath protected from environmental contaminants and which reduces the chance of sparking. There is no relative movement of the parts until the coupling reaches its trip point, at which time the intermediate housing ring, which is axially movable with one of the coupling elements, moves a sufficient distance so that its flange contacts and moves the limit switch which shuts down power to the centrifuge. Although illustrative embodiments of the invention have been shown and described, a wide range of modifications, change and substitution is contemplated in the foregoing disclosure and in some instances, some features of the present invention may be employed without a corresponding use of other features. Accordingly, it is appropriate that the appended claims be construed broadly and in a manner consistent with the scope of the invention.

## Claims

1. A coupling enclosure comprising:
first (158) and second (176) enclosure members having an intermediate enclosure member therebetween, the intermediate enclosure member (168) being movable relative to the first and second members and being sealingly and slidably engaged with the first and second enclosure members, the intermediate enclosure member having a first trippable coupling member (146) attached thereto, and one of the first and second enclosure members having a second trippable coupling member attached thereto, whereby upon tripping of the first and second coupling members, the intermediate enclosure member is axially displaced relative to the first and second enclosure members.

2. A clutch enclosure apparatus comprising a first housing portion (158) attached to rotate with a drive member, the drive member having a drive ring; an intermediate housing portion (168) slidably and sealingly received by the first housing portion, the intermediate portion including a first coupling member fixedly mounted therein and movable into and out of engagement with the drive ring; a second coupling member trippably engaged with the first coupling member to permit the first coupling member to move axially relative to a second coupling member; and a second housing portion (176) attached to the second coupling member and attached to drive an axially extending shaft, the second housing portion being slidingly and sealingly engaged with the intermediate protective housing portion, whereby, in response to the first and second coupling members being tripped, the first coupling member and the intermediate housing portion move axially along the shaft for disengaging the first coupling member from the drive ring.

3. An enclosure as claimed in claim 1 or claim 2 wherein the first coupling member is resiliently urged toward the second coupling member.

4. An enclosure as claimed in any preceding claim wherein the intermediate enclosure member includes a flange (170), and preferably further comprising a movable limit switch (38a) mounted adjacent to the flange so that the axial displacement of the intermediate enclosure member causes the flange to move the limit switch.

5. A coupling enclosure for use with a decanting centrifugal separator comprising: a coupling enclosed in a sealed housing, the housing including first and second enclosure members (158,176) and an intermediate enclosure member (172) mounted in sealed and sliding engagement for axial movement relative to the first and second enclosure members; a first trippable coupling member attached to the intermediate enclosure member, which when tripped, is resiliently urged to move axially toward a second trippable coupling member engaged therewith and to move the intermediate enclosure member relative to the first and second enclosure members; and a flange on the intermediate enclosure member positioned for actuating an adjacent limit switch upon movement of the intermediate enclosure member to shut down operation of the separator.

6. An enclosure as claimed in any preceding claim wherein the intermediate enclosure member includes an annular sleeve (164) having an annular groove (175) formed therein for carrying a sealing "O" ring (174) for engagement with the first enclosure member.

7. An enclosure as claimed in any preceding claim wherein the second enclosure member includes an annular surface having an annular groove (191) formed therein for carrying a sealing "O" ring (190) for engagement with the sleeve of the intermediate enclosure member.

8. An enclosure as claimed in any preceding claim wherein the first enclosure member has an annular sleeve and the intermediate enclosure member has an annular sleeve which sealingly seats within the annular sleeve of the first enclosure member; and preferably wherein the second enclosure member has an annular surface which sealingly seats within the annular sleeve of the intermediate enclosure member.

9. An enclosure as claimed in any preceding claim wherein the first coupling member is press fit in the intermediate enclosure member.

10. A centrifugal separator having a rotatable bowl (12) and rotatable separator means (18), one of the bowl and separator means being driven through a coupling with an enclosure as set out in any preceding claim.

11. A centrifugal separator having a rotatable bowl (12) containing separator means (18) driven through a clutch (38), the clutch being isolated by enclosure means from the bowl.
